# EUROPEAN PATENT APPLICATION

(11) **EP 4 753 216 A1**
(43) Date of publication of application: **03.06.2026**
(21) Application number: 24216396.2
(22) Date of filing: 29.11.2024
(51) Int. Cl.: H04L 12/12, H04L 12/40, H04L 67/12, H04L 69/18, H04L 43/0823

(54) **COMMUNICATION MODULE, COMMUNICATION SYSTEM, AND METHOD FOR THE COMMUNICATION MODULE**

(71) Applicant: NXP USA, Inc., Austin, TX 78735 (US)
(72) Inventor: Elend, Bernd Uwe Gerhard, 5656 AG Eindhoven (NL); Walrant, Thierry G. C., 5656 AG Eindhoven (NL)
(74) Representative: Schmütz, Christian Klaus Johannes

(57) **Abstract**

The present disclosure relates to a communication module comprising: a first communication interface, a second communication interface, and a processing unit, wherein the first communication interface is configured to receive an instruction message according to a first communication protocol, wherein the instruction message represents a predefined reference instruction, wherein the communication module is configured to detect an uninterrupted idle time during which the communication module does not receive a message via the first communication interface, and wherein the processing unit is configured, in response to the idle time exceeding a predefined dead time, to control the second communication interface such that the second communication interface transmits a command message according to a second communication protocol, wherein the command message represents the reference instruction. The present disclosure also relates to a communication system, which includes the communication module, and a method for the communication module.

## Description

### TECHNICAL FIELD

The present disclosure relates to a communication module, a communication system and a method for the communication module.

### BACKGROUND

Vehicles may comprise a communication system including a plurality of components. Among others, the communication system may comprise a first device which operates as a controller. The controller may be used to control a second device, which in an example is a device that serves a specific purpose, for example to control an electric actuator. The controller may not be able to communicate directly with the second device, or conversely the second device may not be able to communicate directly with the controller, but a further device, referred to as a bridge, may be required for communication between the controller and the second device. The bridge may be coupled to the controller so that communication can be performed between the controller and the bridge. The bridge may be coupled to the second device so that communication can be performed between the bridge and the second device. Due to the two communication connections, the controller can communicate with the second device via the bridge. It is possible that the communication connection referred to as the first communication connection between the controller and the bridge is not permanent, but that the first communication connection is only established when required. In a corresponding manner, the communication connection referred to as the second communication connection between the bridge and the second device may not be permanent, but the second communication connection may be established only when needed.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a communication module is provided. The communication module comprising a first communication interface, a second communication interface, and a processing unit, wherein the first communication interface is configured to receive an instruction message according to a first communication protocol, wherein the instruction message represents a predefined reference instruction, wherein the communication module is configured to detect an uninterrupted idle time during which the communication module does not receive a message via the first communication interface, and wherein the processing unit is configured, in response to the idle time exceeding a predefined dead time, to control the second communication interface such that the second communication interface transmits a command message according to a the second communication protocol, wherein the command message represents the reference instruction.

In one or more embodiments, the second communication interface is configured to receive a response message according to the second communication protocol, wherein the response message indicates to be in response to the command message, and wherein the processing unit is configured to control the first communication interface to send a feedback message according to the first communication protocol in response to receiving the response message or sending the command message, wherein the feedback message indicates the transmission of the command message and/or the receipt of a response message.

In one or more embodiments, the second communication interface is configured to receive a response message according to the second communication protocol in response to the sending of the command message, and wherein the processing unit is configured to control the first communication interface to send an error message according to the first communication protocol in response, if the response message is not received within a predefined response time following directly the sending of the command message.

In one or more embodiments, the processing unit is configured to control the first communication interface to send an instruction acknowledge message according to the first communication protocol in response to receiving the instruction message, wherein the instruction acknowledge message indicates receipt of the instruction message.

In one or more embodiments, the first communication protocol and the second communication protocol are different protocols.

In one or more embodiments, the processing unit is configured, in response to receiving the response message, to control the first communication interface to transmit the feedback message without decoding or interpreting the response message.

In one or more embodiments, the first communication interface is one communication interface of the following group of communication interfaces: Ethernet communication interface, CAN communication interface, LIN communication interface, SPI communication interface, 10BASE-T1S interface, WiFi interface, FlexRay interface, USB interface.

In one or more embodiments, the second communication interface is one communication interface of the following group of communication interfaces: Ethernet communication interface, CAN communication interface, LIN communication interface, SPI communication interface, I2C interface, UART interface, FlexRay interface, I2S/TDM/PDM, PWM, I3C, GPIO.

In accordance with a second aspect of the present disclosure, a communication system is provided. The communication system comprising a first device, the communication module according to any of the preceding claims, and a second device, wherein the first device comprises a third communication interface, that is configured to receive and transmit messages according to the first communication protocol, wherein the first device is configured to transmit the instruction message via the third communication interface to the first communication interface of the communication module, wherein the second device comprising a fourth communication interface, and wherein the second device is configured to create and transmit the response message via the fourth communication interface to the second communication interface of the communication module.

In one or more embodiments, the second device is configured to receive the command message via the fourth communication interface, and wherein the second device is configured to create the response message in response to receiving the command message and to transmit the response message via the fourth communication interface to the second communication interface of the communication module.

In one or more embodiments, the first device is a network controller.

In one or more embodiments, the communication module is integrated in the second device.

In accordance with a third aspect of the present disclosure, a method for a communication module is provided, wherein the communication module comprising a first communication interface, a second communication interface, and a processing unit, and wherein the method comprising the following steps: (a) receiving an instruction message according to a first communication protocol via the first communication interface, wherein the instruction message represents a predefined reference instruction, (b) detecting, via the processing unit, an uninterrupted idle time during which the communication module is not receiving a message via the first communication interface, and (c) controlling in response, if the idle time exceeds a predefined dead time, the second communication interface via the processing unit, such that the second communication interface transmits a command message according to athe second communication protocol, wherein the command message represents the reference instruction.

In one or more embodiments, the method may also comprise the following steps: receiving a response message according to the second communication protocol via the second communication interface, wherein the response message indicates to be in response to the command message, and controlling the first communication interface via the processing unit to send a feedback message according to the first communication protocol in response to receiving the response message or in response to sending the command message, wherein the feedback message indicates the transmission of the command message and/or the receipt of a response message.

In one or more embodiments, the method may also comprise the following steps: being ready to receive a response message via the second communication interface according to the second communication protocol in response to the sending of the command message, and controlling the first communication interface via the processing unit to send an error message according to the first communication protocol in response, if the response message is not received within a predefined feedback time following directly the sending of the command message.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figures 1 shows a simplified embodiment of a block diagram of the communication module and the communication system.
Figure 2 shows a simplified example of a sequence diagram of a message exchange.
Figure 3 shows another simplified example of a sequence diagram of a message exchange.
Figures 4 shows another simplified embodiment of a block diagram of the communication module and the communication system.
Figure 5 shows a simplified example of a flow chart of the method.

### DESCRIPTION OF EMBODIMENTS

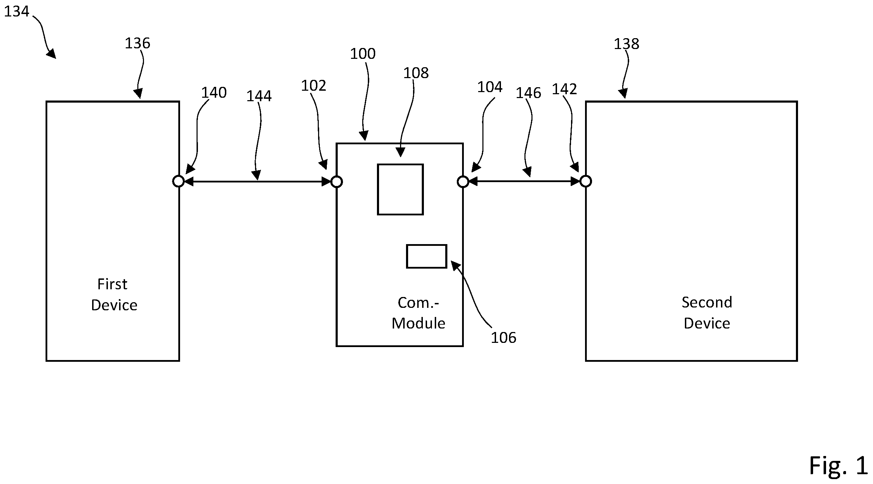

Figure 1 schematically illustrates an embodiment of a communication module 100. The communication module 100 may be configured as a single device or as an integral unit of another device. The communication module 100 may form part of a communication system 134, which is also shown schematically in Figure 1. The following explanations of the communication module 100 may apply in an analogous manner to the communication module 100 if the communication module 100 forms part of the communication system 134. In an analogous manner, the following explanations relating to the communication system 134, in particular if they relate to the associated communication module 100, may apply also to the communication module 100 if the communication module 100 is provided as a single device or as a unit of another device.

The communication module 100 comprises a first communication interface 102 and a second communication interface 104. The first and second communication interfaces 102, 104 may be different communication interfaces 102, 104. The communication module 100 further comprises a processing unit 108. The communication module 100 may also comprise a memory 106. The processing unit 108 may be coupled to the first communication interface 102 to receive and/or transmit a message via the first communication interface 102. The processing unit 108 may be coupled to the second communication interface 104 to receive and/or send a (different) message via the second communication interface 104. The memory 106 may be configured to store a message, a component of the message, and/or data. The processing unit 108 may be coupled to the memory 106 and/or configured to store a received message, a component of a received message, and/or data of a received message in the memory 106. The processing unit 108 may be configured to read a stored message, a component of a stored message, and/or data of a stored message from the memory.

Figure 1 schematically illustrates the communication system 134. The communication system 134 comprises a first device 136, a second device 138, and the communication module 100. The first device 136 may be configured as a controller, in particular as a network controller. The second device 138 may be configured as a decentralized device that may serve a predefined purpose. In an example, the second device 138 may not be a controller.

The first device 136 may comprise a third communication interface 140. The third communication interface 140 of the first device 136 may be coupled to the first communication interface 102 of the communication module 100 via a signal connection 144, also referred to as a first signal connection 144. The first communication interface 102 and/or the third communication interface 140 may be configured to send and/or receive messages according to a first communication protocol. The first communication protocol may be, for example, an Ethernet protocol, in particular according to the 10BASE-T1S standard, or a Controller Area Network, CAN, protocol, in particular according to Classical CAN, according to CAN FD, or according to CAN XL. In principle, the first communication protocol can also be a protocol other than the aforementioned protocols.

The second device 138 may comprise a fourth communication interface 142. The fourth communication interface 142 of the second device 138 may be coupled to the second communication interface 104 of the communication module 100 via a further signal connection 146, also referred to as the second signal connection 146. The second communication interface 104 and/or the fourth communication interface 142 may be configured to send and/or receive messages according to a second communication protocol. The second communication protocol and the first communication protocol may be different communication protocols. For example, the second communication protocol may be a protocol or communication standard according to the I2C standard, the SPI standard, the UART standard or the FlexRay standard. In principle, the second communication protocol can also be a protocol other than one of the aforementioned protocols.

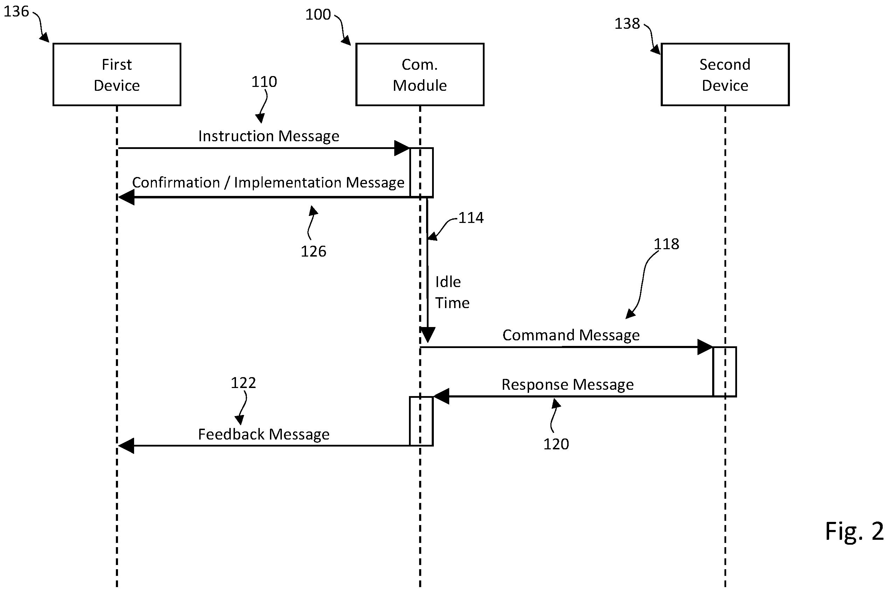

Figure 2 schematically shows an example of a signal sequence diagram. The signal sequence diagram schematically shows an example of the transmission of messages between the first device 136 and the communication module 100, and of messages between the communication module 100 and the second device 138.

The first communication interface 102 of the communication module 100 is configured to receive a message 110, which may also be referred to as an instruction message 110, according to a first communication protocol. In an example, the first device 136 may be configured to send the instruction message 110 to the first communication interface 102 of the communication module 100 via the third communication interface 140, and in particular the first signal connection 144. The instruction message 110 represents a predefined instruction, which may also be referred to as a predefined reference instruction.

In an example, the processing unit 108 of the communication module 100 is configured to control the first communication interface 102 to send a message, also referred to as an instruction acknowledge message 126, in accordance with the first communication protocol in response to receipt of the instruction message 110. The instruction acknowledgement message 126 may be configured in an example to indicate receipt of the instruction message 110. In an example, the first device 136 may be configured to receive the instruction acknowledgement message 126 via the third communication interface 140. As an effect, the first device 136 may obtain via the instruction acknowledgement message the corresponding acknowledgement that the communication module 100, in particular the processing unit 108, has actually received the instruction message 110.

In an example, the processing unit of the communication module 100 may be configured to control the first communication interface 102 to send the instruction acknowledge message 126 directly after and in response to receiving the instruction message 110. With a certain probability, it may be assumed that a communication via the first signal connection 144 between the first communication interface 102 and the third communication interface 140 is operational directly after the receipt of the instruction message 110. As an effect, it may be assumed with a corresponding probability that the instruction acknowledge message 126 can be transmitted undisturbed and/or error-free from the communication module 100 via the first communication interface 102 to the third communication interface 140 of the first device 136.

The communication module 100 comprises a further communication interface 104, referred to as the second communication interface 104. The processing unit 108 of the communication module 100 is configured to control the second communication interface 104 to transmit a message according to a second communication protocol.

In an example, the communication module 100 may be configured to receive a message via the first communication interface 102. This message is also referred to as the first communication message. The first communication message may be a message according to the first communication protocol. The communication module 100 may be configured to transmit a further message, also referred to as the second communication message, via the second communication interface 104 in response to receiving the first communication message. The processing unit 108 of the communication module 100 may be configured to generate the second communication message based on the first communication message, in particular such that the second communication message represents the same payload, in particular the same information, as the first communication message. The processing unit 108 may receive the first communication message via the first communication interface 102. The processing unit 108 may be configured to control the second communication interface 104 such that the second communication interface 104 transmits the second communication message. As an effect, the communication module 100 may be used to enable communication from the first device 136 to the second device 138, in particular even though different communication protocols are used at the first and second devices 136, 138 for transmitting messages.

In an example, the communication module 100 may be configured to receive a message via the second communication interface 104. This message is also referred to as a third communication message. The third communication message may be a message according to the second communication protocol. The communication module 100 may be configured to transmit, in response to receiving the third communication message, a further message, also referred to as the fourth communication message, via the first communication interface 102. The processing unit 108 of the communication module 100 may be configured to generate the fourth communication message based on the third communication message, in particular such that the fourth communication message represents the same payload, in particular the same information, as the third communication message. The processing unit 108 may receive the third communication message via the second communication interface 104. The processing unit 108 may be configured to control the first communication interface 102 to transmit the fourth communication message via the first communication interface 102. As an effect, the communication module 100 may be used to enable communication from the second device 138 to the first device 136, in particular even though different communication protocols are used at the first and second devices 136, 138 for transmitting messages.

Through the previously explained communication via the communication module 100 between the first device 136 and the second device 138, it is possible for the first device 136 to control the second device 138 by means of a communication message. The second device 138 may be controlled by the first device 136 by means of communication messages. However, communication between the first device 136 and the second device 138 via the communication module 100 requires a first signal connection 144 that extends from the third communication interface 140 of the first device 136 to the first communication interface 102 of the communication module 100. The first signal connection 144 may be used to transmit the first communication message from the third communication interface 140 of the first device 136 to the first communication interface 102 of the communication module 100. If the first signal connection 144 is disturbed, faulty and/or interrupted, it may be the case that the first communication message cannot be transmitted via the first signal connection 144 from the third communication interface 140 to the first communication interface 102. As an effect, control of the third device 138 by the first device 136 may be disturbed, faulty and/or interrupted, respectively.

There are devices that are monitored and/or controlled. In an example, the second device 138 may be a device that needs to be monitored and/or controlled. For this purpose, in an example, it may be necessary that communication messages be transmitted to the second device, wherein the communication message represents, for example, control commands, monitoring commands, and/or a status query. The second communication message may be a communication message that represents, for example, a control command, a monitoring command, and/or a status query. As explained above, the processing unit 108 may be configured to generate the second communication message based on the received first communication message. In an example, the first communication message may represent a control command, a monitoring command, and/or a status query.

If the first signal connection 144 is disturbed, faulty and/or interrupted, in this case the first communication message cannot be transmitted or cannot be completely transmitted to the communication module 100. Due to the missing or incomplete first communication message, the communication module 100 will not generate and/or send a second communication message. As an effect, the second device 138, for example, is missing a control command, a monitoring command, and/or a status query. Against this background, there may be a need in an example for the communication module 100 to be enabled if, for example, due to a disturbed, faulty and/or interrupted first signal connection 144, no message is received via the first communication interface 102 for an extended period of time, then the communication module 100 should/could send a command message 118 to the second device 138. In an example, the command message 118 may represent a command for the second device 138. For example, the command may be a command for the second device 138 to transition to a predefined state, in particular to a predefined safe state. In an example, the command message 118 may be used to ensure that the second device 138 operates safely even if the first signal connection 144 is disturbed, faulty and/or interrupted.

The communication module 100, in particular the associated processing unit 108, is configured to detect an uninterrupted time, referred to as idle time 114, during which the communication module 100 does not receive a message via the first communication interface 102. In an example, this message may be understood to mean only a valid and/or relevant message. In an example, only messages arriving via the first communication interface 102 that are addressed to the communication module 100 and/or to the second device 138 are considered to be relevant messages in this context. In an example, the communication module 100 may be configured to ignore messages that are not addressed to the communication module 100 and/or to the second device 138. In a further example, only messages that are specifically intended for transmission to the communication module 100 and/or to the second device 138, for example by means of an associated address of the communication module 100 and/or by means of an identifier for the communication module 100, may be considered as relevant messages. As an effect, other messages, in particular non-relevant messages, which are to be transmitted for example via the first signal connection 144 to another device, in particular another node and/or another communication module, may be ignored by the communication module 100 (from Figure 1). Invalid message such as those with missing or faulty checksums and/or authentication codes may also be ignored.

In an example, an idle time 114 following a reception of a first communication message by the communication module 100 via the first communication interface 102 may be evaluated as permissible by the communication module 100 if the idle time 114 is less than a predefined dead time. This dead time may also be referred to as a first dead time. As an effect, there may be a permissible pause between two communication messages. If the idle time 114 exceeds the predefined first dead time, the exceeding of the first dead time may be an indication of a disturbed, faulty and/or interrupted first signal connection 144. In the event that the first signal connection 144 is actually disturbed, faulty and/or interrupted, the first device 136 may not be able to send any control commands, monitoring commands and/or status requests to the second device 138 via the communication module 100. As an effect, the second device 138 may no longer be monitored and/or controlled by the first device 136.

The processing unit 108 of the communication module 100 is configured to control the second communication interface 104 such that the second communication interface 104 transmits the command message 118 in response to the idle time 114 exceeding the predefined first dead time. The command message 118 is a message according to the second communication protocol. Furthermore, the command message represents the reference instruction. The communication module 100, in particular the processing unit 108, has previously received the reference instruction via the instruction message 110. In an example, the communication module 100, in particular the processing unit 108, may be configured to read the reference instruction from the first instruction message 110. The communication module 100, in particular the processing unit 108, may be configured to generate the command message 118 so that the command message 118 represents the reference instruction.

The reference instruction may comprise and/or represent a command for the second device 138 to change to a predefined state, in particular to a predefined operating state. As an effect, the second device 138 may be controlled by the communication module 100 via the command message 118 for example to change into the predefined state, in particular into the predefined operating state, if the first signal connection 144 is disturbed, faulty and/or interrupted for more than the first dead time. In an example, the predefined state, in particular the predefined operating state, may be a state of the second device 138 in which safe operation of the second device 138 is ensured without control and/or monitoring by the first device 136. As a further effect, safe operation of the second device 138 may be improved.

In an example, the second device 138 is configured to receive the command message 118 via the fourth communication interface 142. The second device 138 may be configured to change to the predefined state, in particular the predefined operating state, in response to receiving the command message 118 and/or based on the reference instruction. In an example, the second device 138 may be configured to generate a message, also referred to as a response message 120, in response to receiving the command message 118 and/or in response to changing to the predefined state. The response message 120 may indicate that the response message 120 is a response to the command message 118. In an example, the response message 120 may indicate that the second device 138 is changing or has already changed to the predefined state. The response message 120 may alternatively or additionally indicate that the change to the predefined state is being or has been performed based on the reference instruction. In an example, the second device 138 may be configured to send the response message 120 via the fourth communication interface 142. The response message 120 may be configured according to the second communication protocol. In an example, the response message 120 may be transmitted via the second signal connection 146 from the fourth communication interface 142 to the second communication interface 104 of the communication module 100.

In an example, the second communication interface 104 of the communication module 100 may be configured to receive a/the response message 120 according to the second communication protocol. The response message 120 indicates that the response message 120 is a response to the command message 118. In an example, the processing unit 108 may be configured to receive the response message 120 via the second communication interface 104.

It may happen that the first signal connection 144 is temporarily disturbed, faulty and/or interrupted. In an example, if the disturbance, error or interruption leads to the first dead time being exceeded, it may also happen that the first signal connection 144 is functional again after the second device 138 has changed to the predefined state, in particular the predefined operating state. As an effect, the second device 138 may transmit the response message 120 to the communication module 100 at a time when the operability of the first signal connection 144 is restored, at least temporarily. In this example, it may be helpful to inform the first device 136 that the second device 138 is changing or has already changed to the predefined state. As an effect, in an example, a feedback message 122 may be used, which can be sent to the first device 136. The feedback message 122 may be a predefined message. As an effect, the feedback message 122 may comprise a small amount of data.

In an example, the processing unit 108 of the communication module 100 is configured to control the first communication interface 102 to transmit a/the feedback message 122 in accordance with the first communication protocol in response to receiving the response message 120 or in response to sending the command message 118. The feedback message 122 may, for example, indicate the transmission of the command message 118 or the receipt of the response message 120. In an example, the feedback message 122 may indicate that the second device 138 is changing to the predefined state or that the second device 138 has changed to the predefined state. As an effect, the first device 136 may deduce from receiving the feedback message 122 that a communication between the first device 136 and the communication module 100 is faulty and/or interrupted or at least was temporarily faulty and/or interrupted. As a further effect, the first device 136 may deduce from the receipt of the response message 120 that the second device 138 will change to the predefined state, in particular the predefined operating state, or has already changed. As yet another effect, the first device 136 may be able to deduce from the receipt of the feedback message 122 that - although the first signal connection 144 was at least temporarily disturbed, faulty or interrupted - safe operation of the second device 138 is ensured, in particular if the predefined operating state of the second device 138 is a predefined, safe operating state of the second device 138.

In an example, the processing unit 108 of the communication module 100 is configured to, in response to receiving the response message 120 and/or to in response to sending the instruction message 118, control the first communication interface 102 to transmit the first feedback message 122 via the first communication interface 102, without the processing unit 108 decoding and/or interpreting the response message 120. The response message 120 may be a predefined message. As an effect, the response message 120 may comprise a small amount of data.

In an example, the first communication protocol and the second communication protocol are different. The two communication protocols may be different communication protocols, in particular. In an example, the communication module 100 may be configured to receive a first communication message via the first communication interface 102. In an example, the processing unit 108 may be configured to generate a second communication message based on the received first communication message, such that the second communication message represents at least a portion of the payload of the first communication message. The first communication message may be a message according to the first communication protocol. The second communication message may be a message according to the second communication protocol. The processing unit 108 may be configured to convert the first communication message into the second communication message.

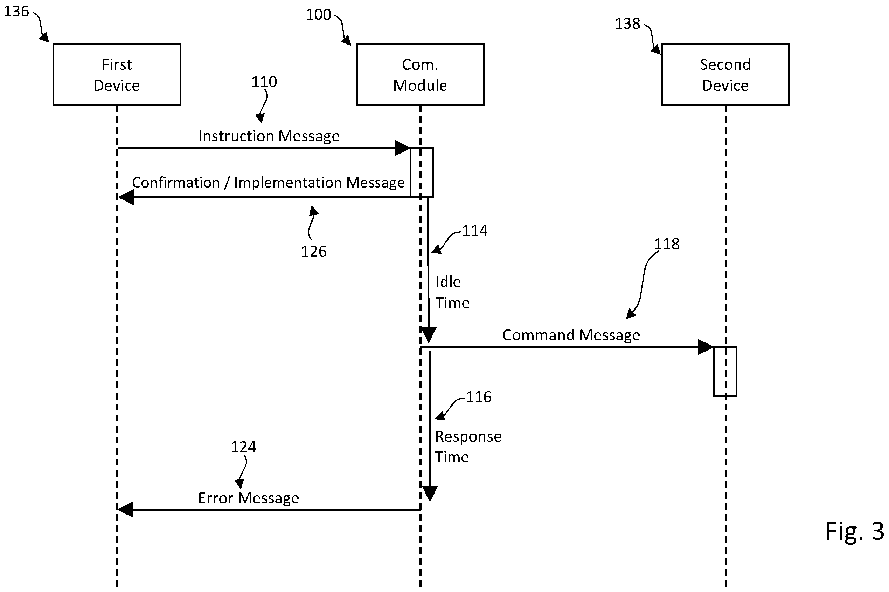

A further example of a signal sequence diagram is shown in Figure 3. For the example of Figure 3 reference is made in an analogous manner to the explanations, advantageous features, technical effects and advantages as previously explained in connection with Figures 1 and 2. The example of Figure 3 differs from the example of Figure 2 in that the second device 138 does not send the response message 120.

In an example, the communication module 100, in particular the processing unit 108, may be configured to detect an uninterrupted time, referred to as the response time 116, during which the communication module 100 does not receive a message via the second communication interface 104. In an example, this message may be understood to mean only a relevant message. In an example, only messages arriving via the second communication interface 104 that are addressed to the communication module 100 and/or to the first device 136 may be considered in this context as relevant messages. In an example, the communication module 100 may be configured to ignore incoming messages via the second communication interface 104 that are not addressed to the communication module 100 and/or to the first device 136. In a further example in this context, only messages that are specifically intended for transmission to the communication module 100 and/or to the first device 136, for example by means of an associated address of the communication module 100 and/or by means of an identifier for the communication module 100, may be considered as relevant messages. As an effect, other messages, in particular non-relevant messages, which are to be transmitted for example via the second signal connection 146 to another device, in particular to another node and/or another communication module, as well as invalid messages, may be ignored by the communication module 100.

In an example, a response time 116 following the sending of the command message 118 may be evaluated as permissible by the communication module 100 if the response time 116 is less than a predefined dead time. This dead time may also be referred to as a second dead time. As an effect, there may be a permissible pause between the command message 118 and the potentially received response message. If the response time 116 exceeds the predefined second dead time, the exceeding of the second dead time in an example may be a hint of a disturbed, faulty and/or interrupted second signal connection 146. In the event that the second signal connection 146 is actually disturbed, faulty and/or interrupted, then in an example the second device 138 may also have not received the command message 118 and/or the second device 138 may have not transmitted the response message 120 to the communication module 100.

The processing unit 108 of the communication module 100 is configured to control the first communication interface 102 to transmit an error message 124 in response to if the response time 116 exceeds the predefined second dead time. The error message 124 may be a message according to the first communication protocol. The error message may be predefined. The error message 124 may represent an error in the communication between the communication module 100 and the second device 138. In an example, the error message 124 may represent a timeout error that represents a response message 120 not received within the second time in response to the command message 118.

In an example, the first device 136 may be configured to receive the error message 124 via the third communication interface 140. As an effect, the first device 136 may be informed that the communication module 100 has attempted to transmit the command message 118 to the second device 138, but that no response message 120 has been received or that no response message 120 has been received within the second time 116. As an effect, the first device 136 may trigger further measures, in particular to achieve a safe operating state for the communication system 134.

It was previously explained that Figure 1 schematically shows an example of a communication module 100. Figure 1 also schematically shows an example of a communication system 134. The explanations, advantageous features, technical effects and/or advantages as previously explained in connection with Figures 1-3 may apply in an analogous manner to the communication system 134.

In an example, the first device 136 may be configured as a controller, in particular as a network controller. The second device 138 may be configured as a decentralized device that may serve a predefined purpose. In an example, the second device 138 may be not configured as a controller.

It has already been explained above that the first communication protocol and the second communication protocol are typically different protocols. For example, the first communication protocol may be a communication protocol according to an Ethernet standard, a CAN standard, a LIN standard, a FlexRay standard, an SPI standard, a USB standard, or a WiFi standard. An example of the Ethernet standard is the standard for 10BASE-T1S. An example of the CAN standard refers to Classical CAN, CAN FD, or CAN XL as in ISO 11898. In an example, the first communication interface 102 is formed as one communication interface from the following group of communication interfaces: Ethernet communication interface, CAN communication interface, LIN communication interface, SPI communication interface, 10BASE-T1S interface, WiFi interface.

The second communication protocol may be, for example, a communication protocol according to an Ethernet standard, a CAN standard, a LIN standard, an SPI standard, an I2C standard, a UART standard, a USB standard, or a FlexRay standard. An example of the Ethernet standard is the standard for 10BASE-T1S. An example of the CAN standard refers to Classical CAN, CAN FD, or CAN XL. In an example, the second communication interface 104 is formed as one communication interface or a group of at least one communication interface from the following group of communication interfaces: Ethernet communication interface, CAN communication interface, LIN communication interface, SPI communication interface, I2C interface, UART interface, Flexray interface, I2S/TDM/PDM, PWM, I3C, GPIO. For example, the second communication interface may be formed by one interface or two interfaces (combined) form the aforementioned group of interfaces.

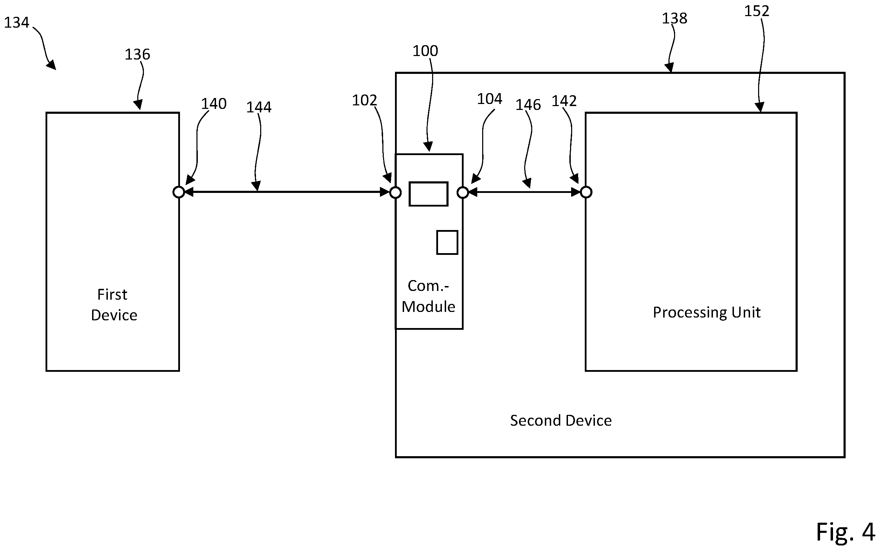

Figure 4 schematically illustrates another example of the communication system 134. For the communication system 134 of Figure 4, reference is made to the preceding explanations, features, technical effects and/or advantages in an analogous manner, as previously explained in connection with Figures 1-3, in particular for the communication module 100 and/or the communication system 134.

Compared to the example of the communication system 134 of Figure 1, the communication system 134 of Figure 4 differs in that the communication module 100 is integrated into the second device 138. As can be seen from Figure 4, the second device 138 may comprise a (further) processing unit 152. The fourth communication interface 142 may form part of the (further) processing unit 152. Therefore, the second signal connection 146 may extend from the second communication interface 104 of the communication module 100 to the fourth communication interface 142 of the (further) processing unit 152 of the second device 138.

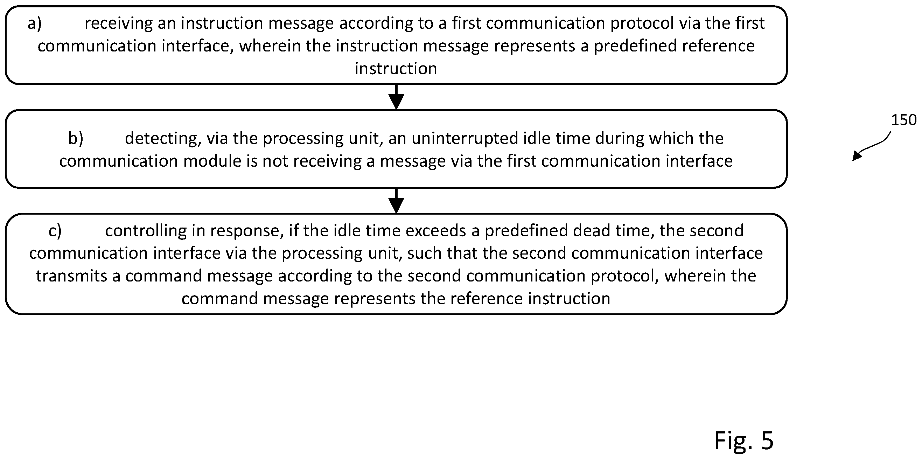

Figure 5 schematically illustrates an example of a method 150.

In an example the method 150 is configured for communication module 100 comprising a first communication interface 102, a second communication interface 104, and a processing unit 108. The method 150 may comprise the steps:
a) receiving an instruction message according to a first communication protocol via the first communication interface, wherein the instruction message represents a predefined reference instruction,
b) detecting, via the processing unit, an uninterrupted idle time during which the communication module is not receiving a message via the first communication interface, and
c) controlling in response, if the idle time exceeds a predefined dead time, the second communication interface via the processing unit, such that the second communication interface transmits a command message according to the second communication protocol, wherein the command message represents the reference instruction.

For the method 150, reference may be made in an analogous manner to the explanations, features, technical effects and advantages as previously explained for the communication system 134 and/or the communication module 100.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A communication module comprising:
a first communication interface, a second communication interface, and a processing unit,
wherein the first communication interface is configured to receive an instruction message according to a first communication protocol, wherein the instruction message represents a predefined reference instruction,
wherein the communication module is configured to detect an uninterrupted idle time during which the communication module does not receive a message via the first communication interface, and
wherein the processing unit is configured, in response to the idle time exceeding a predefined dead time, to control the second communication interface such that the second communication interface transmits a command message according to a second communication protocol, wherein the command message represents the reference instruction.

2. The communication module according to claim 1, wherein the second communication interface is configured to receive a response message according to the second communication protocol, wherein the response message indicates to be in response to the command message, and wherein the processing unit is configured to control the first communication interface to send a feedback message according to the first communication protocol in response to receiving the response message or sending the command message, wherein the feedback message indicates the transmission of the command message and/or the receipt of a response message.

3. The communication module according to claim 1, wherein the second communication interface is configured to receive a response message according to the second communication protocol in response to the sending of the command message, and wherein the processing unit is configured to control the first communication interface to send an error message according to the first communication protocol in response, if the response message is not received within a predefined response time following directly the sending of the command message.

4. The communication module according to any of the preceding claims, wherein the processing unit is configured to control the first communication interface to send an instruction acknowledge message according to the first communication protocol in response to receiving the instruction message, wherein the instruction acknowledge message indicates receipt of the instruction message.

5. The communication module according to any of the preceding claims, wherein the first communication protocol and the second communication protocol are different protocols.

6. The communication module according to any of the preceding claims, wherein the processing unit is configured, in response to receiving the response message, to control the first communication interface to transmit the feedback message without decoding or interpreting the response message.

7. The communication module according to any of the preceding claims, wherein the first communication interface is one communication interface of the following group of communication interfaces: Ethernet communication interface, CAN communication interface, LIN communication interface, SPI communication interface, 10BASE-T1S interface, WiFi interface, FlexRay interface, USB interface.

8. The communication module according to any of the preceding claims, wherein the second communication interface is one communication interface of the following group of communication interfaces: Ethernet communication interface, CAN communication interface, LIN communication interface, SPI communication interface, I2C interface, UART interface, FlexRay interface, I2S/TDM/PDM, PWM, I3C, GPIO.

9. A **communication system** comprising:
a first device, the communication module according to any of the preceding claims, and a second device,
wherein the first device comprises a third communication interface, that is configured to receive and transmit messages according to the first communication protocol,
wherein the first device is configured to transmit the instruction message via the third communication interface to the first communication interface of the communication module,
wherein the second device comprising a fourth communication interface, and
wherein the second device is configured to create and transmit the response message via the fourth communication interface to the second communication interface of the communication module.

10. The communication system according to claim 9, wherein the second device is configured to receive the command message via the fourth communication interface, and wherein the second device is configured to create the response message in response to receiving the command message and to transmit the response message via the fourth communication interface to the second communication interface of the communication module.

11. The communication system according to any of claims 9 to 10, wherein the first device is a network controller.

12. The communication system according to any of claims 9 to 11, wherein the communication module is integrated in the second device.

13. A **method** for a communication module, wherein the communication module comprising a first communication interface, a second communication interface, and a processing unit, and wherein the method comprising the following steps:
a) receiving an instruction message according to a first communication protocol via the first communication interface, wherein the instruction message represents a predefined reference instruction,
b) detecting, via the processing unit, an uninterrupted idle time during which the communication module is not receiving a message via the first communication interface, and
c) controlling in response, if the idle time exceeds a predefined dead time, the second communication interface via the processing unit, such that the second communication interface transmits a command message according to a second communication protocol, wherein the command message represents the reference instruction.

14. The method according to claim 13,
receiving a response message according to the second communication protocol via the second communication interface, wherein the response message indicates to be in response to the command message, and
controlling the first communication interface via the processing unit to send a feedback message according to the first communication protocol in response to receiving the response message or in response to sending the command message, wherein the feedback message indicates the transmission of the command message and/or the receipt of a response message.

15. The method according to claim 13 or 14,
being ready to receive a response message via the second communication interface according to the second communication protocol in response to the sending of the command message, and
controlling the first communication interface via the processing unit to send an error message according to the first communication protocol in response, if the response message is not received within a predefined feedback time following directly the sending of the command message.
